# EUROPEAN PATENT APPLICATION

(11) **EP 2 312 861 A2**
(43) Date of publication of application: **20.04.2011**
(21) Application number: 10163611.6
(22) Date of filing: 21.05.2010
(51) Int. Cl.: H04N 13/00

(54) **Stereoscopic display apparatus and image processing method thereof**

(30) Priority: 16.10.2009 KR 20090098710
(71) Applicant: SAMSUNG ELECTRONICS CO., LTD., Suwon-si, Gyeonggi-do (KR)
(72) Inventor: Chen, Han feng, Gyeonggi-do (KR); Seong, Ki-bum, Gyeonggi-do (KR); Sung, Jun-ho, Seoul (KR); Ha, Tae-hyeun, Gyeonggi-do (KR); Park, Jae-sung, Seoul (KR)
(74) Representative: Walaski, Jan Filip

(57) **Abstract**

A display apparatus and an image processing method thereof are disclosed. A display apparatus includes a display unit; a signal processor which classifies an image comprising a left eye image and a right image into one of a first image and a second image according to a predetermined brightness level, generates at least two sub frames including a white frame if the image is classified into a first image, generates at least two sub frames comprising a black frame if the image is classified into a second image, and outputs the generated sub frames to the display unit. Λ signal transmitter outputs, to external shutter glasses, a control signal corresponding to the left eye image and the right eye image.

## Description

The present invention relates to a display apparatus and an image processing method thereof, and more particularly, to a display apparatus and an image processing method thereof which displays a three-dimensional image.

With the development of technology, a display apparatus processes and displays various types of video signals, whether digital or analog. Recently, users can view stereoscopic images as three-dimensional image signals through a monitor or TV which is easy to access. Unlike a two-dimensional image signal, the 3D image signal has contents divided for a user's left eye and right eye. The divided images are displayed for user's left eye and right eye.

To experience a 3D image by using an image which is divided into left eye and right eye, a user wears shutter glasses which are open and closed to alternately display left and right screens.

If a left eye image and a right eye image are alternately displayed, a method of inserting a black image between frames is used to prevent cross talk that can occur, for example, when the left eye image and the right eye image are displayed simultaneously or overlapped.

Accordingly, it is an aspect of the exemplary embodiments to provide a display apparatus and an image playing method thereof which displays an image, from which crosstalk is reduced, while maintaining a brightness level.

Additional aspects and/or advantages will be set forth in part in the description which follows and, in part, will be obvious from the description, or may be learned by practice of the exemplary embodiments.

The foregoing and/or other aspects of the exemplary embodiments are also achieved by providing a display apparatus, including: a display unit; a signal processor which classifies an image comprising a left eye image and a right image into one of a first image and a second image according to a predetermined brightness level, generates at least two sub frames including a white frame if the image is classified as a first image, generates at least two sub frames comprising a black frame if the image is classified as a second image, and outputs the generated sub frames to the display unit; and a signal transmitter which outputs to external shutter glasses a control signal corresponding to the left eye image and the right eye image.

The signal processor may classify the left eye image and the right eye image as the first image if at least one of the left eye image and the right eye image includes a pixel which has a brightness level higher than a predetermined critical brightness in a preset scope or higher, and may classify the left eye image and the right eye image as the second image if at least one of the left eye image and the right eye image includes a pixel which has a brightness level higher than the predetermined critical brightness in less than a preset scope.

The sub frame of the first image may include the white frame and a compensation frame whose brightness level is lower than the first image.

The sub frame of the second image may include the black frame and a compensation frame whose brightness level is higher than the second image.

The signal processor may scale up a brightness level of the left eye image and the right eye image which are classified into the first image, and may generate the sub frame based on the upscaled frame.

The signal processor may scale down the brightness level of the left eye image and the right eye image classified into the second image, and may generate the sub frame based on the downscaled frame.

The signal processor may set a scale coefficient based on at least one of a sum of absolute difference (SAD) of the left eye image and the right eye image, a SAD of a brightness difference between the left eye image and the right eye image and a maximum brightness level of the left eye image and the right eye image to scale up or down the left eye image and the right eye image.

The signal processor may have a brightness level of the scaled frame correspond to a brightness level of the sub frame according to a predetermined lookup table.

The brightness level of the black frame may be the bottom 10% of overall brightness levels and the brightness level of the white frame may be the top 10% of overall brightness levels.

The display unit may include one of a liquid crystal display (LCD) panel and an organic light emitting diode (OLED) panel.

The control signal may include a sync signal which corresponds to a vertical sync signal with respect to the left eye image and the right eye image.

The signal processor may classify the left eye image and the right eye image as one of the first and second images according to the brightness level, and sequentially may output a first compensation frame whose brightness level is lower than the left eye image, a first white frame, a second compensation frame whose brightness level is lower than the right eye image and a second white frame if the left eye image and the right eye image are classified as a first image.

The signal processor may classify the left eye image and the right eye image as one of the first and second images according to the brightness level, and sequentially may output a first compensation frame whose brightness level is higher than the left eye image, a first black frame, a second compensation frame whose brightness level is higher than the right eye image and a black frame if the left eye image and the right eye image are classified as a second image.

Another aspect of the exemplary embodiments can be achieved by providing an image processing method of a display apparatus which comprises a display unit, the method including: classifying an image comprising a left eye image and a right eye image as one of a first image and a second image according to a predetermined brightness level; generating at least two sub frames including a white frame if the image is classified into the first image, and generating at least two sub frames including a black frame if the image is classified into the second image; and outputting a control signal to external shutter glasses corresponding to the left eye image and the right eye image while outputting the generated sub frames to the display unit.

The classifying of the image as the first image and the second image may include classifying the left eye image and the right eye image as the first image if at least one of the left eye image and the right eye image includes a pixel which has a brightness level higher than a predetermined critical brightness in a preset scope or more, and classifies the left eye image and the right eye image into the second image if at least one of the left eye image and the right eye image includes a pixel which has a brightness level higher than the critical brightness in less than the preset scope.

The sub frame of the first image may include the white frame and a compensation frame which has a brightness level lower than the first image.

The sub frame of the second image may include the black frame and a compensation frame which has a brightness level higher than the second image.

The generating of the sub frames may include setting a scale coefficient based on at least one of a SAD of the left eye image and the right eye image, a SAD of a brightness difference of the left eye image and the right eye image and a maximum brightness level of the left eye image and the right eye image to scale up the brightness level of the left eye image and the right eye image classified as a first image; generating a scaled frame by upscaling the brightness level of the left eye image and the right eye image with the scale coefficient; and generating at least two sub frames based on the scaled frame.

The generating of the sub frames may include setting a scale coefficient based on at least one of a SAD of the left eye image and the right eye image, a sum of absolute differences of a brightness difference between the left eye image and the right eye image and a maximum brightness level of the left eye image and the right eye image to scale down the brightness level of the left eye image and the right eye image classified as a second image; generating a scaled frame by downscaling the brightness level of the left eye image and the right eye image with the scale coefficient; and generating at least two sub frames based on the scaled frame.

The generating of the sub frames may include having a brightness level of the scaled frame correspond to the brightness level of the sub frames according to a predetermined lookup table.

The brightness level of the black frame may be the bottom 10% of overall brightness levels and the brightness level of the white frame may be the top 10% of overall brightness levels.

The control signal may include a sync signal corresponding to a vertical sync signal with respect to the left eye image and the right eye image.

The classifying of the image as the first image and the second image may include classifying the left eye image and the right eye image as one of the first image and the second image according to the brightness level, and the generating of the sub frames includes generating a first compensation frame whose brightness level is lower than the left eye image, a first white frame, a second compensation frame whose brightness level is lower than the right eye image and a second white frame if the left eye image and the right eye image are classified as a first image, and sequentially outputting the first compensation frame, the first white frame, the second compensation frame and the second white frame.

The classifying of the image as the first image and the second image may include classifying the left eye image and the right eye image as one of the first and second images according to the brightness level, and the generating of the sub frames includes generating a first compensation frame whose brightness level is higher than the left eye image, a first black frame, a second compensation frame whose brightness level is higher than the right eye image and a second black frame if the left eye image and the right eye image are classified as a second image, and sequentially outputting the first compensation frame, the first black frame, the second compensation frame and the second black frame.

The above and/or other aspects of the exemplary embodiments will become apparent and more readily appreciated from the following description of the exemplary embodiments, taken in conjunction with the accompanying drawings of which:
FIG. 1 is a control block diagram of a display apparatus according to an exemplary embodiment;
FIG. 2 illustrates a sub frame which is displayed in the display apparatus in FIG. 1;
FIG. 3 illustrates a sub frame of the display apparatus in FIG. 1 and opening and closing of shutter glasses;
FIG. 4 is a graph which illustrates a sub frame brightness of an input image of a display apparatus according to another exemplary embodiment;
FIG. 5 illustrates generation of a sub frame of a second image of the display apparatus in FIG. 4;
FIG. 6 illustrates generation of a sub frame of a first image of the display apparatus in FIG. 4; and
FIG. 7 is a control flowchart of an image processing method of the display apparatus in FIG. 4.

Hereinafter, exemplary embodiments will be described with reference to accompanying drawings, wherein like numerals refer to like elements and repetitive descriptions will be avoided as necessary.

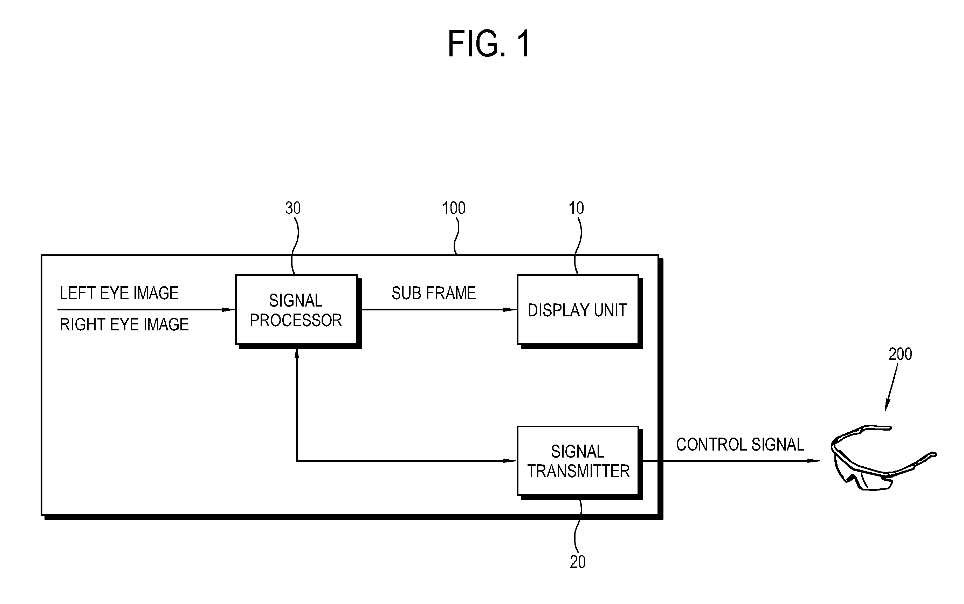

FIG. 1 is a control block diagram of a display apparatus according to an exemplary embodiment. As shown therein, a display apparatus 100 includes a display unit 10, a signal transmitter 20 which outputs a control signal to external shutter glasses 200, and a signal processor 30 which processes input left eye image and input right eye image. The display apparatus 100 according to the present invention may include a television processing and displaying a broadcasting signal, a monitor connected to a computer main body or a portable terminal such as a mobile phone. The display apparatus 100 may receive and display a two-dimensional image signal, i.e., a plane image signal or a three-dimensional image signal, i.e. a stereoscopic image signal. The stereoscopic image signal is divided into a left eye image to be recognized by a human left eye, and a right eye image to be recognized by a human right eye. The divided images are alternately displayed by frame.

The display unit 10 may include a liquid crystal display (LCD) panel including a liquid crystal layer or an organic light emitting diode (OLED) panel including an organic light emitting layer. The LCD panel or the OLED panel is typically rectangular, and a data signal corresponding to a single frame is sequentially scanned from an upper part to a lower part of the panel. If a 3D image is displayed, a left eye image and a right eye image may overlap each other while the data signal is scanned, which may result in cross talk occurring between the left eye image and the right eye image.

The signal transmitter 20 generates a control signal to alternately open a left eye shutter and a right eye shutter of shutter glasses 200 and transmits the control signal to the shutter glasses 200. A left eye image of a stereoscopic image is recognized by a user's left eye when a left eye shutter is open while a right eye image thereof is recognized by a user's right eye when a right eye shutter is opened. That is, the control signal according to the present exemplary embodiment includes a sync signal corresponding to a vertical sync signal with respect to a left eye image and a right eye image. The signal transmitter 20 may include an infrared transmitter. If an intensity of an infrared signal transmitted as a control signal exceeds a certain critical value, one of the left eye shutter and the right eye shutter is open. If the intensity of the infrared signal is less than the certain critical value, the other one of the left eye shutter and the right eye shutter is open. The signal transmitter 20 may include a wired/wireless interface to communicate with the shutter glasses 200.

The shutter glasses 200 alternately open and close the left eye shutter and the right eye shutter by synchronizing with the control signal output by the signal transmitter 20. The shutter glasses 200 may include a liquid crystal shutter.

The signal processor 30 classifies input left eye image and right eye image into a first image and a second image according to a predetermined brightness level, generates at least two sub frames including a white frame corresponding to the first image, and generates at least two sub frames including a black frame corresponding to the second image. The left eye image and the right eye image may be alternately input by frame, or may be combined with each other in a single frame. Regardless of the reception method, the left eye image and the right eye image are individually output, per frame, to the display unit 10. The signal processor 30 sequentially outputs at least two sub frames generated for each frame, to the display unit 10. The frame according to the exemplary embodiments means an image displayed on the display unit 200 for a predetermined time, and includes a displayed image or an image signal forming the image.

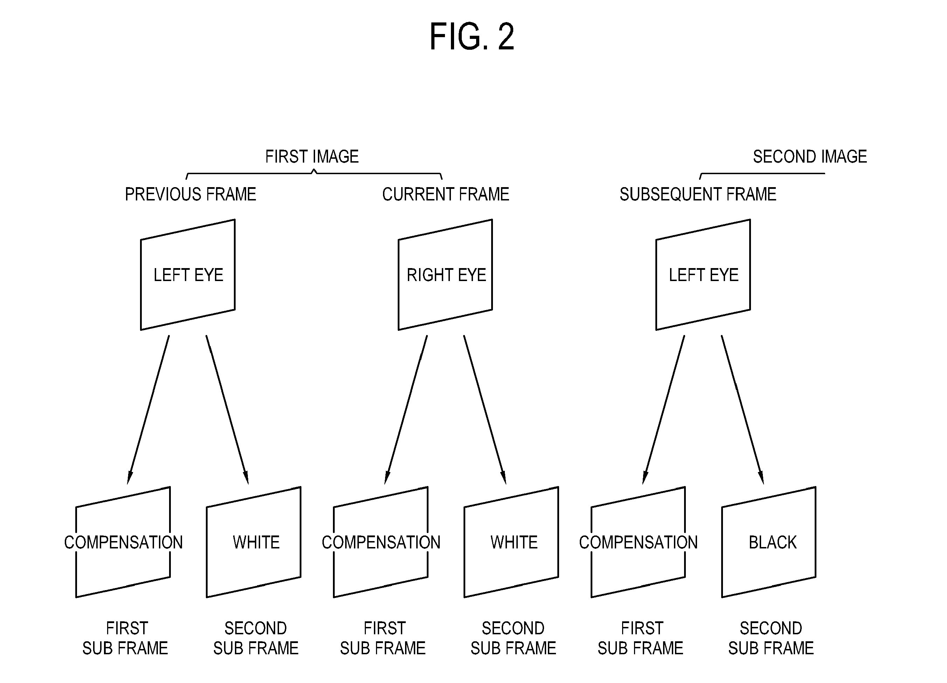

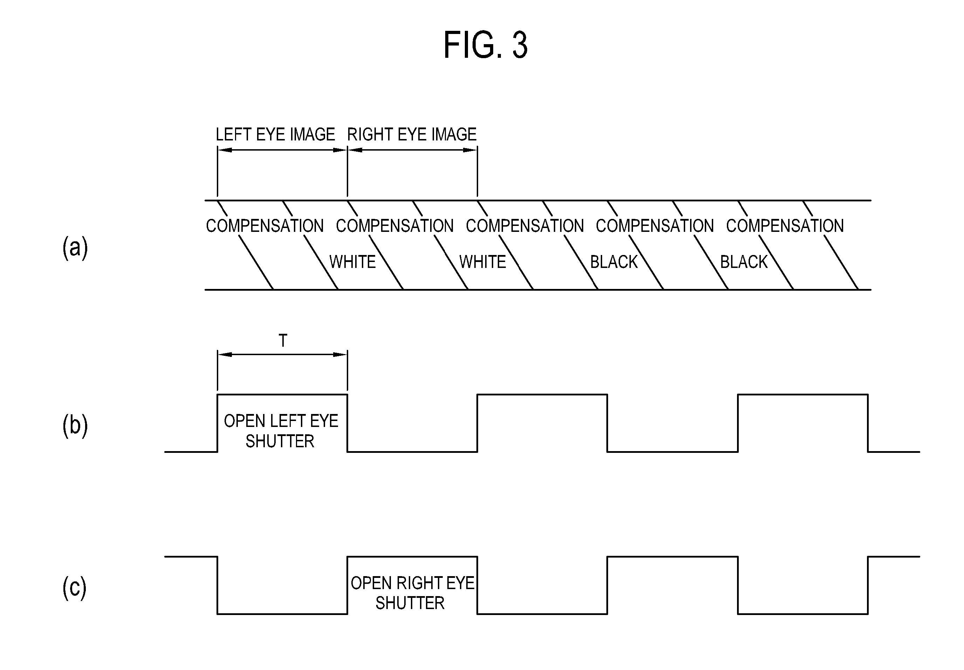

The signal processor 30 classifies the left eye image and the right eye image into a first image if the images, i.e., input primitive frames are bright images having a pixel, whose brightness level is higher than a predetermined critical brightness, in a preset scope or higher. If the primitive frames are dark images having a pixel whose brightness level is higher than the predetermined critical brightness in less than the preset scope, the signal processor 30 classifies the left eye image and the right eye image as a second image. For example, an image may have 256 brightness levels from zero to 255. In this case, if 90% or more of the pixels or 95% or more of the pixels included in the primitive frame has a brightness level not lower than 192, the image is classified as a first image. If pixels having a brightness level not lower than 192 account for less than 90% of all the pixels, the image is classified as a second image. In sum, the signal processor 30 classifies overall bright images and overall dark images and then generates a sub frame according to the classification result. The signal processor 30 may classify each of the left eye image and the right eye image as one of the first image and the second image, or classify one of the left eye image and the right eye image as one of the first and second images. If one of the left eye image and the right eye image, e.g., the left eye image is classified into the first image, the right eye image corresponding to the left eye image has a high possibility of also being a first image. Accordingly, if at least one of the input left eye image and right eye image has pixels whose brightness level is higher than the critical brightness in the preset scope or more, the signal processor 30 may classify the corresponding left eye image and right eye image as the first image, and vice versa. FIG. 2 illustrates a sub frame which is displayed in the display apparatus 100 according to the present exemplary embodiment. FIG. 3 illustrates a sub frame and opening and closing of shutter glasses 200. As in FIG. 2, the signal processor 30 generates two sub frames for each of the left eye image and the right eye image. A first sub frame and a second sub frame are generated on the basis of the left eye image corresponding to a previous frame and the right eye image corresponding to a current frame. Also, another two sub frames are generated on the basis of subsequent frames which are input consecutively. The second sub frame includes a white frame or a black frame which is inserted between the left eye image and the right eye image corresponding to the primitive frame, and the first sub frame includes a compensation frame whose brightness level is higher or lower than that of the left eye image and the right eye image. The white frame and the black frame include a single colored image overall, and the compensation frame includes a primitive frame whose brightness level is adjusted overall.

In the case where the previous frame and the current frame which are classified as a first image, a white frame is generated as a second sub frame. In the case where the subsequent frame which is classified as a second image, a black frame is generated as a second sub frame. In the first image which has a white frame as a sub frame, a brightness level of remaining compensation frames is lower than that of the primitive frame. In the second image which has a black frame as a sub frame, a brightness level of the compensation frame is higher than that of the primitive frame. Preferably, an average brightness of the first sub frame and the second sub frame corresponds to the brightness level of the primitive frame. Thus, if a white frame which has a brightness level higher than the primitive frame is generated, the brightness level of the compensation frame becomes lower than the primitive frame. If a black frame which has a level lower than the primitive frame is generated, the brightness level of the compensation frame becomes higher than the primitive frame.
(a) in FIG. 3 illustrates sub frames which are displayed when an image corresponding to a single frame is transmitted to the display unit 10 from top to bottom, i.e., by increasing the number of vertical lines of the display unit 10. The left eye image and the right eye image are input at intervals T by a vertical sync signal (not shown), and two sub frames are also scanned to the display unit 10 at intervals T. While the compensation frame corresponding to the left eye image is scanned to the display unit 10, the left eye shutter is open (b). While the compensation frame corresponding to the right eye image is scanned to the display unit 10, the right eye shutter is open (c). The left eye shutter and the right eye shutter are open only when the concerned image is scanned, and are closed when an opposite image is scanned. As shown therein, if the left eye image and the right eye image are classified as a first image, a first compensation frame which has a brightness level lower than the left eye image, a first white frame, a second compensation frame which has a brightness level lower than the right eye image and a second white frame, are sequentially output. Meanwhile, if the left eye image and the right eye image are classified into the second image, a first compensation frame which has a brightness level higher than the left eye image, a first black frame, a second compensation frame which has a brightness level higher than the right eye image and a second black image, are sequentially output.

As a black frame or a white frame which are not recognized is inserted between compensation frames corresponding to an image, a user may not recognize the left eye image and the right eye image simultaneously, and crosstalk in which the left eye image and the right eye image overlap each other may be prevented. In the conventional display apparatus, a black image is inserted between the left eye image and the right eye image to reduce the occurrence of crosstalk. In that case, however, the brightness level of an image sharply decreases. According to the present exemplary embodiment, crosstalk between the images is prevented, and the original brightness level of an image may be maintained by inserting a black frame or a white frame depending on the brightness of the image. As the compensation frame whose brightness level is changed, is generated, the overall brightness of the image may be adjusted similarly to the input primitive image.

The critical brightness, which is a basis for classifying the first image and the second image is not fixed, and may vary depending on a user's preference, the installation environment and the output state of a picture quality. The scope of pixels which have the critical brightness may be set as a scope of 90% to 100%, or a larger scope.

According to another exemplary embodiment, the brightness level by which the first and second images are classified may be set as an average brightness value instead of the brightness level of each pixel. For example, if an average brightness value of the left eye image or the right eye image exceeds a certain critical value, the images may be classified as a first image. If the average brightness value is lower than the critical value, the images may be classified as a second image.

A brightness level of the black frame may be the bottom 10% of overall brightness levels while a brightness level of the white frame may be top 10% of overall brightness levels. That is, the brightness of the black frame may include a gray level as well as a black level of zero. In the case of a white frame, the brightness level may not be at the highest level of 255.

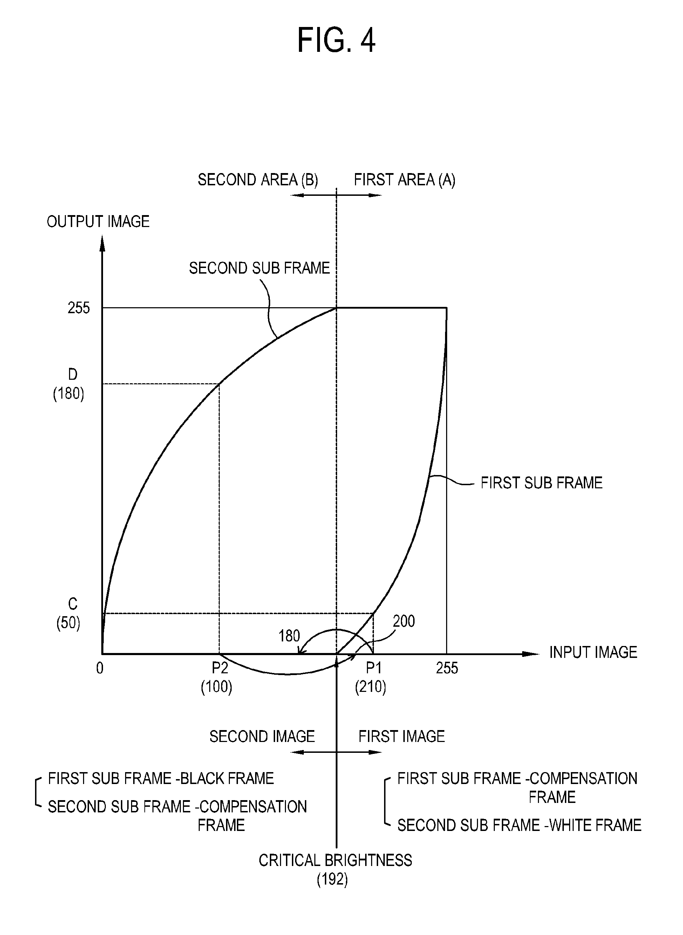

FIG. 4 is a graph which illustrates a brightness level of a sub frame of an input image of a display apparatus according to another exemplary embodiment. The signal processor 30 generates a sub frame by adjusting the brightness level of a primitive frame according to a predetermined lookup table (not shown). FIG. 4 illustrates a brightness level of an output image with respect to an input image, according to the lookup table. If the brightness level of the input image is higher than a critical brightness, it is classified as a first image, and a sub frame is generated along a line in a first area (A) in the graph. If the brightness level of the input image is lower than the critical brightness, it is classified as a second image, and a sub frame is generated along a line in a second area (B) in the graph. As shown therein, the first image has a compensation frame generated as a first sub frame, and a white frame as a second sub frame. The second image has a black frame generated as a first sub frame, and a compensation frame as a second sub frame.

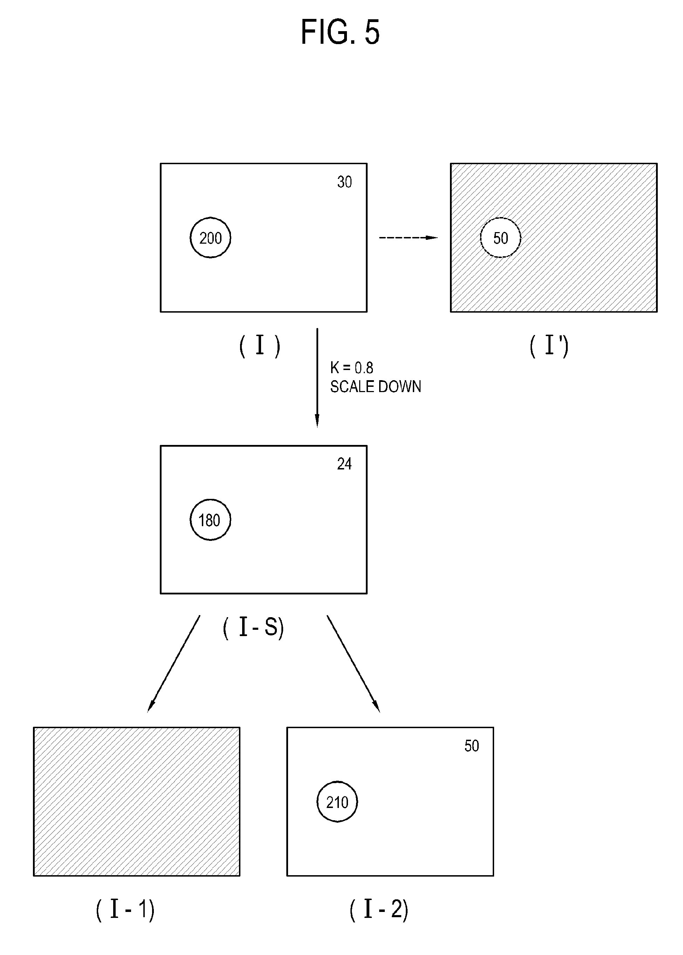

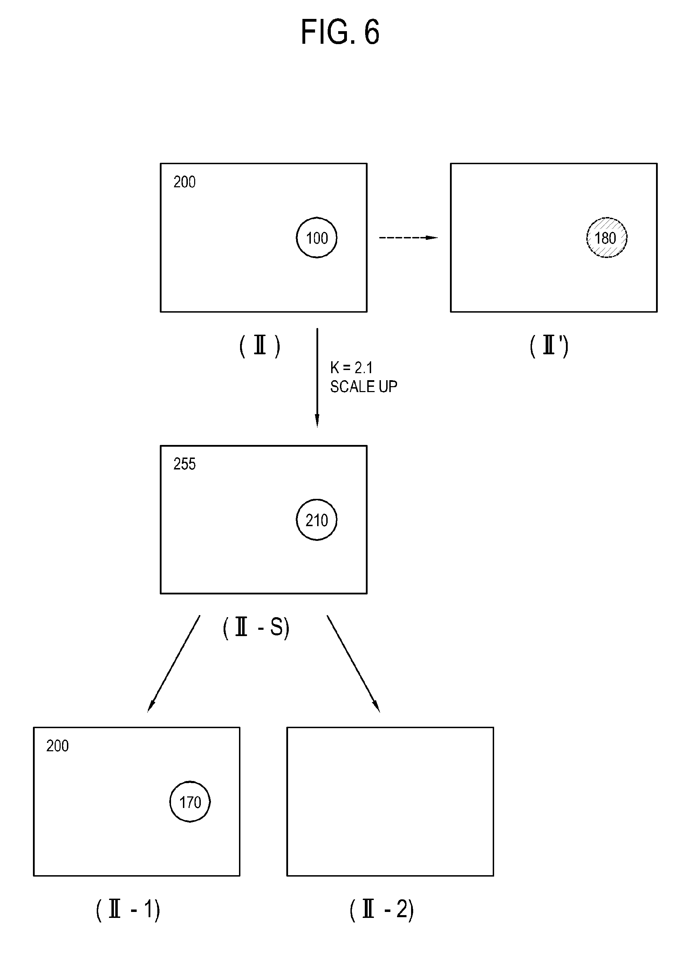

Even if the primitive frame is classified as a first image which is a bright image, the primitive frame may include pixels whose brightness level is lower than the critical brightness. Even if the primitive frame is classified as a second image which is a dark image, it may include pixels whose brightness level is higher than the critical brightness. FIGS. 5 and 6 illustrate processes of scaling up or down the image and generating a sub frame by using the upscaled or downscaled frame.

The second image (I) in FIG. 5 is a dark image at a brightness level of 30, but has a pixel P1 at a brightness level of 200 in a left side of the image. If the critical brightness is set as 192, the pixel P1 at the brightness level of 200 exists in the first area (A) in FIG. 4. Accordingly, if a black frame is generated, as in FIG. 4, the brightness level of the first sub frame corresponding to the pixel P1 may be a brightness value C (e.g., 50) which is not black. In this case, the image is displayed in the left side of the black frame like a second image' (I') and overlaps the compensation frame of an adjacent image, thereby causing crosstalk. To remove the crosstalk, the signal processor 30 scales down the brightness level of the primitive frame classified as a second image, and generates a sub frame based on the downscaled frame. The scaled frame I-S has a brightness level adjusted at a predetermined ratio from the original brightness level. As shown therein, the primitive frame is multiplied by a scale coefficient K to decrease the overall brightness level. The scale coefficient K which scales down the primitive frame is larger than zero and smaller than one. The scale coefficient K may be set based on at least one of a sum of absolute difference (SAD) of the left eye image and the right eye image, a SAD of the brightness difference between the left eye image and the right eye image and a maximum brightness level of the left eye image and the right eye image. That is, the scale coefficient K is not a fixed value, but a variable changed depending on an input image. The signal processor 30 includes an algorithm to set the scale coefficient K based on a brightness character of the input primitive frame. The pixel P1 which has a brightness level of 200 is scaled down to 180 by the scale coefficient K (0.8), and the downscaled pixel belongs to the second area (B) in the graph.

The signal processor 30 generates a black frame I-1 and a compensation frame I-2 by using the downscaled frame I-S as the input image. The black frame I-1 does not include an image while the compensation frame I-2 has a brightness level higher than the scaled frame I-S. The average brightness level of the black frame I-1 and the compensation frame I-2 is adjusted similar to that of the scaled frame I-S.

A first image II in FIG. 6 is a bright image at a brightness level of 200, but has a pixel P2 which has a brightness level of 100, in the right side of the image. If the critical brightness is set as 192, the pixel P2 which has a brightness level of 100 exists in the second area (B) in FIG. 4. Accordingly, if a white frame is generated as in FIG. 4, a brightness level of a second sub frame corresponding to the pixel P2 may have a brightness value D (e.g., 180) which is not white. In this case, an image is displayed in the right side of the white frame like the first image' (II'). To remove the crosstalk, the signal processor 30 scales up the brightness level of the first image II, and generates a sub frame based on the upscaled frame. The scale coefficient K which scales up the primitive image is larger than one, and may be set as 2.1 as shown therein. The pixel P2 which has a brightness level of 100 is scaled up to 210 by the scale coefficient K (2.1), and the upscaled pixel belongs to the first area (A) in the graph of Fig. 4. The signal processor 30 generates a first sub frame corresponding to the compensation frame II-1 and a second sub frame corresponding to a white frame II-2 based on the upscaled frame II-S. The white frame does not include an image, and the compensation frame II-1 has a brightness level lower than the scaled frame II-S.

The black frame I-1 or the white frame II-2 may include an image according to the scale coefficient K. That is, the black frame I-1 or the white frame II-2 may include an image which is more blurred than the first image II and the second image I. If the degree of scaling increases, the chances of crosstalk decrease. If the degree of scaling decreases, the original brightness level of the image may be maintained. In sum, the scale coefficient K representing the scaling degree should be set as a proper value in consideration of crosstalk and brightness.

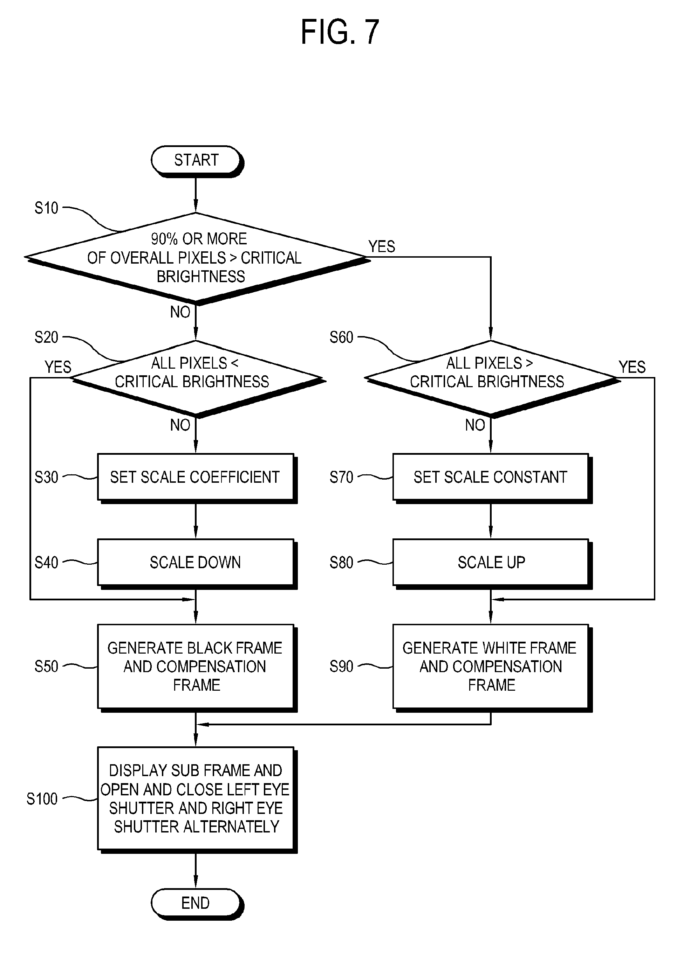

FIG. 7 is a control flowchart of an image processing method of the display apparatus 100 according to the present exemplary embodiment. The image processing method will be described with reference to FIG. 7.

The signal processor 30 classifies the sequentially input left eye image and right eye image as first and second images according to the predetermined brightness level. The signal processor 30 determines whether the left and right eye images have pixels having a brightness level higher than the critical brightness in a preset scope or more, e.g., whether 90% or more of the overall pixels have a brightness level higher than the critical brightness (S10).

If it is determined that 90% or more of the overall pixels do not have a brightness level higher than the critical brightness, the signal processor 30 determines that the input image is a second image, and determines whether all of the pixels have a brightness level lower than the critical brightness (S20).

If all the pixels have a brightness level lower than the critical brightness, the signal processor 30 generates a black frame and a compensation frame based on the second image without the downscaling process (S50). In this case, the scale coefficient K is equal to one.

However, if less than all the pixels have a brightness level lower than the critical brightness, the signal processor 30 sets the scale coefficient K based on the second image (S30), and scales down the second image according to the scale coefficient K (S40).

The signal processor 30 generates a black frame and a compensation frame based on the downscaled frame (S50). The compensation frame may have a brightness level higher than the second image or the scaled frame.

If 90% or more of the overall pixels does not have a brightness level higher than the critical brightness, the signal processor 30 determines that the input image is the first image, and determines whether all of the pixels have a brightness level higher than the critical brightness (S60).

If all of the pixels have a brightness level higher than the critical brightness, the signal processor 30 generates the white frame and the compensation frame based on the first image without the upscaling process (S90). In this case, the scale coefficient K is one.

However, if not all of the pixels have a brightness level higher than the critical brightness, the signal processor 30 sets the scale coefficient K based on the first image (S70), and scales up the first image according to the scale coefficient K (S80).

The signal processor 30 generates the white frame and the compensation frame based on the upscaled frame (S90). The compensation frame has a brightness level lower than the first image or the scaled frame.

The signal processor 30 then outputs the generated sub frame to the display unit 10 at certain intervals T, and the signal transmitter 20 outputs the control signal to the shutter glasses 200 to open the left eye shutter and the right eye shutter of the shutter glasses 200 corresponding to the left eye image and the right eye image (S100).

According to another exemplary embodiment, the signal processor 30 may skip one of the scale-up or scale-down process of the primitive frame. As in the foregoing exemplary embodiment, if the first image is determined based on whether 90% or more of the overall pixels has a brightness level higher than the critical brightness, the scale-up process may be omitted. Otherwise, if the second image is determined based on whether 90% or more of the overall pixels has a brightness level lower than the critical brightness and the first image is classified again, the scale-down process may be omitted.

The exemplary embodiments add a black frame or a white frame according to a brightness level of an image to thereby prevent crosstalk from a display apparatus displaying a three-dimensional image and maintain a brightness level of an original image.

As described above, a display apparatus and an image processing method thereof according to the exemplary embodiments may display a three-dimensional image, from which a crosstalk is reduced, while maintaining a brightness level of an original image.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus, comprising:
a signal processor which classifies an image including a left eye image and a right image as one of a first image and a second image according to a predetermined brightness level, generates at least two sub frames including a white frame if the image is classified as the first image, generates at least two sub frames including a black frame if the image is classified as the second image, and outputs the generated sub frames to a display unit; and
a signal transmitter which outputs to external shutter glasses a control signal corresponding to the left eye image and the right eye image.

2. The display apparatus according to claim 1, wherein the signal processor classifies the left eye image and the right eye image as the first image if at least one of the left eye image and the right eye image includes a pixel which has a brightness level higher than a predetermined critical brightness in a preset scope or higher, and classifies the left eye image and the right eye image as the second image if at least one of the left eye image and the right eye image includes a pixel which has a brightness level higher than the predetermined critical brightness in less than a preset scope.

3. The display apparatus according to claim 2, wherein the sub frame of the first image includes the white frame and a compensation frame whose brightness level is lower than the first image.

4. The display apparatus according to claim 2, wherein the sub frame of the second image includes the black frame and a compensation frame whose brightness level is higher than the second image.

5. The display apparatus according to claim 2, wherein the signal processor scales up a brightness level of the left eye image and the right eye image which are classified as the first image, and generates the sub frame based on the upscaled frame, the signal processor sets a scale coefficient based on at least one of a sum of absolute difference of the left eye image and the right eye image, a sum of absolute difference of a brightness difference between the left eye image and the right eye image and a maximum brightness level of the left eye image and the right eye image to scale up or down the left eye image and the right eye image.

6. The display apparatus according to claim 2, wherein the signal processor scales down the brightness level of the left eye image and the right eye image classified as the second image, and generates the sub frame based on the downscaled frame, the signal processor sets a scale coefficient based on at least one of a sum of absolute difference of the left eye image and the right eye image, a sum of absolute difference of a brightness difference between the left eye image and the right eye image and a maximum brightness level of the left eye image and the right eye image to scale up or down the left eye image and the right eye image.

7. The display apparatus according to claims 5 or 6, wherein the signal processor has a brightness level of the scaled frame correspond to a brightness level of the sub frame according to a predetermined lookup table.

8. The display apparatus according to claim 1, wherein the signal processor classifies the left eye image and the right eye image as one of the first and second images according to the brightness level, and sequentially outputs a first compensation frame whose brightness level is lower than the left eye image, a first white frame, a second compensation frame whose brightness level is lower than the right eye image and a second white frame if the left eye image and the right eye image are classified as the first image.

9. The display apparatus according to claim 1, wherein the signal processor classifies the left eye image and the right eye image as one of the first and second images according to the brightness level, and sequentially outputs a first compensation frame whose brightness level is higher than the left eye image, a first black frame, a second compensation frame whose brightness level is higher than the right eye image and a black frame if the left eye image and the right eye image are classified as the second image.

10. An image processing method of a display apparatus which comprises a display unit, the method comprising:
classifying an image including a left eye image and a right eye image as one of a first image and a second image according to a predetermined brightness level;
generating at least two sub frames including a white frame if the image is classified as the first image, and generating at least two sub frames including a black frame if the image is classified as the second image; and
outputting a control signal to external shutter glasses corresponding to the left eye image and the right eye image while outputting the generated sub frames to the display unit.

11. The method according to claim 10, wherein classifying the image as the first image and the second image includes classifying the left eye image and the right eye image as the first image if at least one of the left eye image and the right eye image includes a pixel which has a brightness level higher than a predetermined critical brightness in a preset scope or higher, and classifies the left eye image and the right eye image as the second image if at least one of the left eye image and the right eye image includes a pixel which has a brightness level higher than the critical brightness in less than the preset scope.

12. The method according to claim 10, wherein the sub frame of the first image includes the white frame and a compensation frame which has a brightness level lower than the first image, and the sub frame of the second image includes the black frame and a compensation frame which has a brightness level higher than the second image.

13. The method according to claim 11, wherein the generating the sub frames includes setting a scale coefficient based on at least one of a sum of absolute difference of the left eye image and the right eye image, a sum of absolute difference of a brightness difference of the left eye image and the right eye image and a maximum brightness level of the left eye image and the right eye image to scale up the brightness level of the left eye image and the right eye image classified into the first image;
generating a scaled frame by upscaling the brightness level of the left eye image and the right eye image with the scale coefficient; and
generating at least two sub frames based on the scaled frame.

14. The method according to claim 11, wherein generating the sub frames includes setting a scale coefficient based on at least one of a sum of absolute difference of the left eye image and the right eye image, a sum of absolute difference of a brightness difference between the left eye image and the right eye image and a maximum brightness level of the left eye image and the right eye image to scale down the brightness level of the left eye image and the right eye image classified as the second image;
generating a scaled frame by downscaling the brightness level of the left eye image and the right eye image with the scale coefficient; and
generating at least two sub frames based on the scaled frame.

15. The method according to claim 13 or 14, wherein generating the sub frames includes having a brightness level of the scaled frame correspond to the brightness level of the sub frames according to a predetermined lookup table.
